# EUROPEAN PATENT APPLICATION

(11) **EP 2 052 711 A2**
(43) Date of publication of application: **29.04.2009**
(21) Application number: 08004490.2
(22) Date of filing: 11.03.2008
(51) Int. Cl.: A61J 9/00, A61J 17/00

(54) **Silicone baby products**

(30) Priority: 27.10.2007 US 983184 P
(71) Applicant: SAR HOLDINGS INTERNATIONAL LIMITED, Tsim Sha Tsui Hong kong (CN)
(72) Inventor: Yeung, Hin Shing Ken, 33 Canton Road, Tsim Sha Tsui, Kowloon, Hong Kong (CN)
(74) Representative: Weber, Martin

(57) **Abstract**

The invention relates to silicone baby products such as bottles, feeding bottles, bottle holders, and pacifiers. The silicone baby products may optionally comprise a temperature indicator.

## Description

### FIELD OF THE INVENTION

This invention relates to silicone baby products such as bottles, feeding bottles, pacifiers, and bottle holders and methods of making the silicone baby products. The silicone baby products may optionally comprise a temperature indicator.

### BACKGROUND OF THE INVENTION

Parents are constantly seeking for baby products with improved functions that can save their time and hassle and at the same time take better care of the babies. Various materials have been proposed for the manufacture of baby products, but none of them has been satisfactory.

It has been recognized that milk given to the babies should be close to body temperature. Milk that is too much above or below the body temperature may be rejected by the baby or even harmful to the health of the baby. The most common method for determining the temperature of the milk was through the feeling of the fingertip or the hand palm. The determination was often unreliable as it simply depends upon the thermal feeling of a particular person having access to the feeding bottle who was not free from the influences of atmospheric or room temperature. It is thus desirable to provide a feeding bottle or a bottle holder with a more precise temperature indication function. It is also desirable to provide a feeding bottle that does not spill even when the bottle is placed horizontally.

Parents are also concerned with the sanitary conditions of pacifiers, as they frequently fall out of baby's mouths and exposed to unsanitary contacts. Since babies are particularly susceptible to contracting illnesses, it is desirable to keep the pacifiers clean at all times. There has been provided pacifiers with a separate cover to protect the sucking portion. However, the covers are easily misplaced, lost, or left in a separate location with the pacifier. Attachment means such as clip, strings, and cords may be used, but such means may cause unwanted disturbance, or even dangers to the babies. It is thus desirable to provide a pacifier having a shield which is easily movable and engagable over the sucking portion.

### SUMMARY OF THE INVENTION

Disclosed herein are baby products that are easy to be cleaned, have high resistances to heat and moisture and are safe to baby. In one aspect, disclosed herein are bottles comprising a container comprising an open end and a temperature indicator attached to the outer surface of the container, wherein the container comprises a silicone composition.

In some embodiments, the bottle further comprising a teat assembly, wherein the teat assembly comprises a dome-shaped portion, a sucking end connected to and extending from the dome-shaped portion, wherein the sucking end comprises a perforated tip, and a flange at the base of the dome-shaped portion.

In some embodiments, the bottle further comprises a mounting ring, wherein the mounting ring engages the teat assembly to the container.

In some embodiments, the mounting ring engages the open end of the container by threaded engagement or fictional engagement.

In some embodiments, the container is curved with a concave front surface and a convex back surface when the container is viewed from the side.

In some embodiments, at least one supporting member is attached to the convex back surface of the container.

In some embodiments, the perforated tip of the sucking end is above the open end of the container when the bottle lies on the supporting member.

In some embodiments, the supporting member comprises a plurality of legs.

In some embodiments, the temperature indicator comprises a thermochromic material.

In some embodiments, the thermochromic material is a liquid crystal, a leuco dye or a combination thereof.

In another aspect, disclosed herein are pacifiers comprising a teat portion comprising a base and a sucking portion connected to and extending from the base, and an invertible member having a first fixed position and a second fixed position, wherein the invertible member is connected to and extended from the base in the same direction as the sucking portion at the first fixed position and opposite to the sucking portion at the second fixed position.

In some embodiments, the invertible member has a substantially spherical or ellipsoidal shape when positioned at the first fixed position or in the second fixed position.

In some embodiments, at least part of the sucking portion is enclosed by the invertible member in the first fixed position.

In some embodiments, the pacifier further comprises a grip connected to and extending from the base opposite to the sucking portion.

In some embodiments, at least a part of the grip is enclosed by the invertible member in the second fixed position.

In some embodiments, the teat assembly comprises a silicone composition.

In another aspect, disclosed herein are bottle holders comprises a body portion comprising an open end and a close end, at least one handle integrally extending from the open end of the body portion, and a temperature indicator attached to the outer surface of the body portion, wherein the body portion and the at least one handle comprise a silicone composition.

In some embodiments, the body portion is cylindrical.

In some embodiments, the at least one handle comprises a pair of handles.

In some embodiments, the pair of handles is substantial mirror image of each other.

In some embodiments, the silicone composition comprises a silicone rubber, a liquid silicone rubber, a fluorosilicone rubber, a silicone-modified ethylene propylene rubber, a silicone polyester resin, a silicone alkyd resin, a silicone epoxy resin, or a combination thereof.

In some embodiments, the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

### BRIEF DESCRIPTION OF THE DRAWINGS

Figure 1A depicts an exploded view of one embodiment of the bottle disclosed herein. Figure 1B depicts an elevated view of one embodiment of the teat assembly disclosed herein.

Figure 2A depicts an elevated view of one embodiment of the pacifier disclosed herein. Figure 2B depicts a cross-section view of the pacifier in Figure 2A. Figure 2C depicts an elevated view of one embodiment of the pacifier disclosed herein.

Figure 3 depicts a front view and side view of an embodiment of the bottle holder disclosed herein.

### DESCRIPTION OF EMBODIMENTS OF THE INVENTION

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, R^{L}, and an upper limit, R^{U}, is disclosed, any number falling within the range is specifically disclosed. In particular, the following numbers within the range are specifically disclosed: R=R^{L}+k*(R^{U}-R^{L}), wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Disclosed herein are bottles comprising a container comprising an open end and a temperature indicator attached to the outer surface of the container. In some embodiments, the container comprises a silicone composition.

In some embodiments, the bottle disclosed herein comprises a container comprising an open end and a temperature indicator attached to the outer surface of the container, and the container may comprise a silicone composition.

The bottles disclosed herein may be of any convenient shape and volume. In some embodiments, the bottles may be in the shape of a cylinder, prism, cube, triangular prism, rectangular prism, pyramid, cone, rectangular pyramid, or triangular pyramid. In some embodiments, the size of the bottle ranges from 10 cm³ to about 1000 cm³, from about 50 cm³ to about 750 cm³, from about 100 cm³ to about 500 cm³, from about 150 cm³ to about 350 cm³, or from about 200 to about 300 cm³.

The bottles disclosed herein may further comprise a teat assembly, which comprises a dome-shaped portion, a sucking end connected to and extending from the dome-shaped portion, wherein the sucking end comprises a perforated tip, and a flange at the base of the dome-shaped portion.

The perforation of the perforated tip may be in any convenient size and shape. In some embodiments, the perforation is in X-shaped, Y-shaped, I-shaped, O-shaped, or star-shaped.

In some embodiments, the flange is in the shape of a ring defined by an outer diameter and an inter diameter. The outer diameter may be larger than the inner diameter by about 0.5 cm to about 5 cm, about 1 cm to about 4 cm, about 1.5 cm to about 3.5 cm, or about 2 cm to about 3 cm.

In some embodiments, the teat assembly comprises at least one rough surface which is in contact with the lip of the baby at either the dome-shaped portion or the sucking end or a mixture of both regions. The rough surface has a surface roughness ranging from about 5 mums to about 50 mums, from about 10 mums to about 40 mums, or from about 15 mums to about 30 mums.

The teat assembly may be of any convenient shape and design suitable for sucking by a baby's mouth. For example, the teat assembly can be of the designs described in U.S. Patent Publication Nos. 2003/0141268 and 2007/0068890; U.S. Patent Nos. 4,623,068, 5,699,921, 6,176,380, and 6,286,697, which are incorporated herein by reference.

The bottles disclosed herein may further comprise a mounting ring for engaging the teat assembly to the container. In some embodiments, the mounting ring is engaged with the teat assembly and the container after the flange of the teat assembly is placed on the edge of the open end of the container. In some embodiments, the mounting ring engages the open end of the container by threaded engagement or fictional engagement.

In some embodiments, the bottle further comprises a cover in any convenient size or shape releasably engaged to the bottle. In some embodiments, the cover is releasably connected to the bottle by engagement with the mounting ring as disclosed herein. The engagement between the cover and the mounting ring may be frictional or threaded engagement. In some embodiments, the cover protects the teat assembly from unsanitary contacts when not in use.

Sometimes it is desirable to place the bottle horizontally instead of vertically on a table or any other given surface. When the bottle is so placed, there is danger that the liquid inside the bottle may be spilled out from the perforated tip. In some embodiments, the container is curved to form a banana shape, L shape or hook shape. In other embodiments, the container is curved with a concave front surface and a convex back surface when the container is viewed from the side. In some embodiments, the bottle can be laid horizontally on the convex back surface. Because of the curvature of the container, the perforation of the sucking end will be lifted above the liquid level when the container is about 100%, 99%, 95%, 90%, 85%, 80%, 75%, 70%, 65%, 60% , 55%, 50%, 45%, or 40% full of liquid. In other embodiments, the perforation of the sucking end is above the open end of the container.

In some embodiments, at least one supporting member is attached to the convex back surface of the container to stabilize the container when it is laid horizontally on the convex back surface. In some embodiments, the supporting member is a flattened surface or a slip-resistant surface. In other embodiments, the supporting member comprises 2, 3, 4, 5, 6, or 7 legs.

In some embodiments, the entire bottle disclosed herein may form a shape pleasant to human eye, such as the shape of a dog, donkey, cow, tiger, chicken, duck, fish, moon, or banana.

Disclosed herein are pacifiers comprising a teat portion comprising a base and a sucking portion connected to and extending from the base, and an invertible member having a first fixed position and a second fixed position, wherein the invertible member is connected to and extended from the base in the same direction as the sucking portion at the first fixed position and opposite to the sucking portion at the second fixed position.

The invertible member may be made of any suitable soft elastic, semi-rigid or rigid material such as thermoplastic materials or curable elastomeric materials, which may optionally comprise a silicone composition. It may alternatively be made in the form of a web of textile material like gauze or non-textile material.

In some embodiments, when the invertible member is positioned at the first fixed position or in the second fixed position, it forms a substantially spherical, substantially ellipsoidal, spherical, ellipsoidal, or any other shape. In some embodiments, the invertible member has a waved surface, a ridged surface, or a smooth surface.

In some embodiments, the pacifier further comprises a grip connected to and extending from the base opposite to the sucking portion. The grip may be in any shape and made of any material. In one embodiment, the grip is in the shape of a teat and made of a resilient material. In other embodiments, the grip is in the shape of a sphere, half-sphere, rod, ring, rope, cylinder, prism, cube, pyramid, cone, or combinations thereof.

In some embodiments, at least 10%, 20%, 30%, 40%, 50%, 60%, 70%, 80%, 90% or 100% of the sucking portion is enclosed by the invertible member in the first fixed position. In some embodiments, at least 10%, 20%, 30%, 40%, 50%, 60%, 70%, 80%, 90% or 100% of the grip is enclosed by the invertible member in the second fixed position.

Disclosed herein are bottle holders comprising a body portion comprising an open end and a close end, at least one handle integrally extending from the open end of the body portion, and a temperature indicator attached to the outer surface of the body portion, wherein the body portion and the at least one handle comprise a silicone composition.

In some embodiments, the body portion is in the shape of a cylinder, prism, cube, triangular prism, rectangular prism, pyramid, cone, rectangular pyramid, or triangular pyramid or combinations thereof.

In some embodiments, the bottle holder comprises a pair of handles. The pair of handles may be different from or substantial mirror image of each other, or are identical to each other. As used herein, a handle is a "substantial mirror image" of another handle when the one handle is greater than about 80%, greater than about 90%, greater than about 95%, greater than about 96%, greater than about 97%, greater than about 98%, greater than about 99% in shape and area of the 2-dimension virtual image formed by the reflection of the other handle in a plane mirror.

In some embodiments, the handle comprises a hole for fingers to go through. The hole may be in any convenient size and shape. In some embodiments, the hole is in the shape of a circle, oval, triangle, inverse triangle, square, rhombi, rectangle, parallelogram, slit, pentagon, hexagon, octagon, crest or a combination thereof.

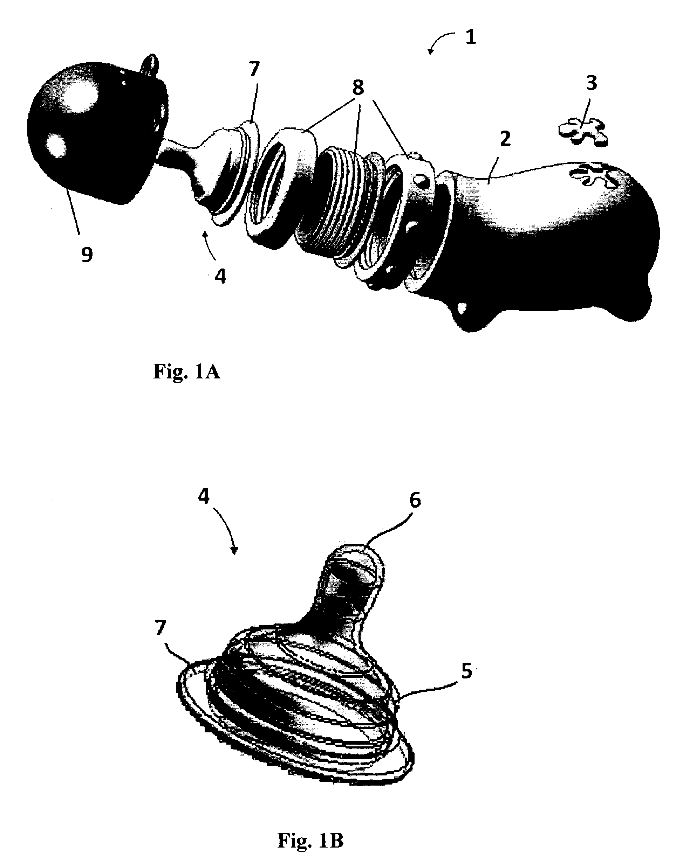

Figures 1A-1B depict an embodiment of the bottle disclosed herein. The bottle **1** comprises a container **2**, a temperature indicator **3** attached to the outer surface of the container **2**. The bottle **1** also comprises a teat assembly **4**, which comprises a dome-shaped portion **5**, a perforated sucking end **6**, and a flange **7**. The bottle also comprises three mounting rings **8** for releasably engaging the teat assembly **4** to the container **2**. The bottle also comprises a cover **9** for releasably engaged to the mounting rings **8** for protecting the teat assembly **4** from contamination.

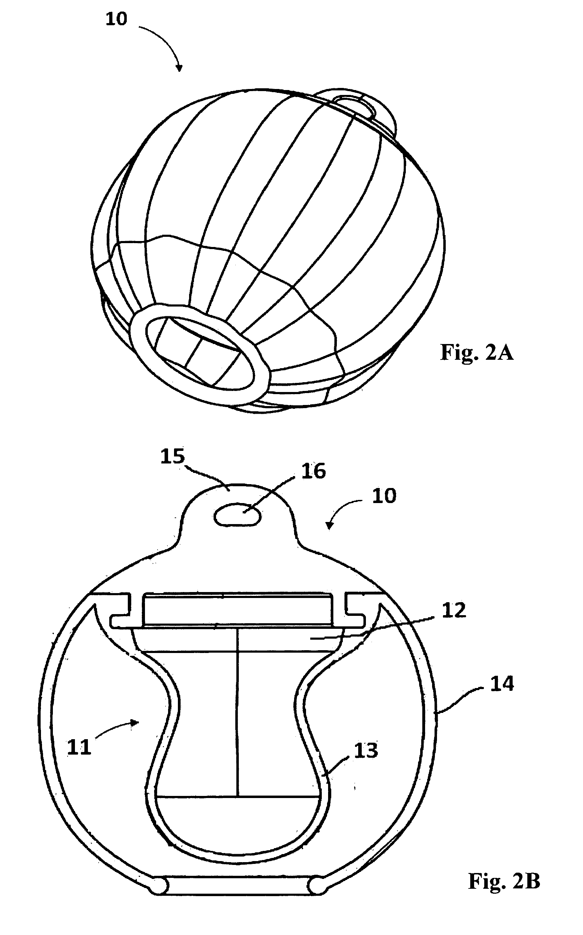

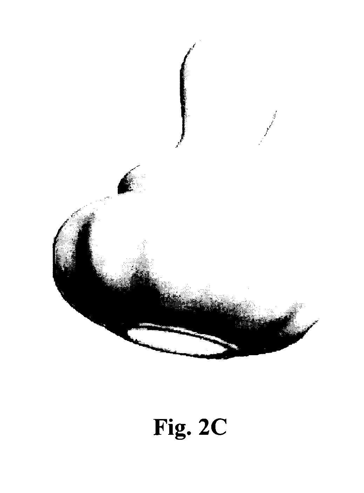

Figures 2A-2C depict an embodiment of the pacifier disclosed herein. The pacifier **10** comprises a teat portion **11** comprising a base **12** and a sucking portion **13**, an invertible member **14**, and a grip **15** comprising a hole **16** at the center of the grip **15**. The invertible member **14** can adopt a first fixed position (as shown in Figure 2A) and a second fixed position (as shown in Figure 2C). When the invertible member **14** adopts the first fixed position, it forms a spherical enclosure to enclose the teat portion **11** of the pacifier **10**, as shown in Figure 2A. When the invertible member **14** adopts the second fixed position, it forms another spherical enclosure where the grip **15** of the pacifier **10** is enclosed, as shown in Figure 2C.

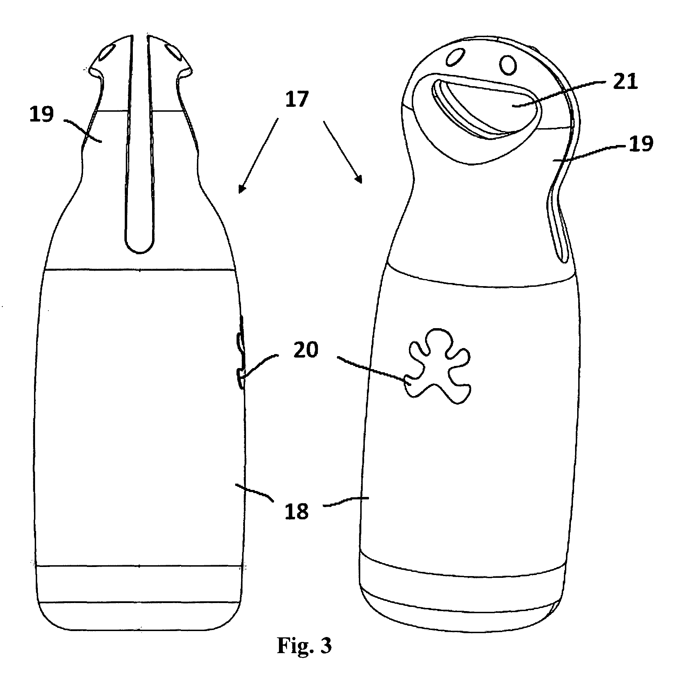

Figure. 3 depicts the front view and side view of an embodiment of the bottle holder **17** disclosed herein. The bottle holder **17** comprises a body portion **18**, a pair of handles **19** extended from the top of the body portion **18**, and a temperature indicator **20** attached to the outer surface of the bottle holder **17**. Each of the handle **19** comprises a hole **21**.

In some embodiments, the temperature indicator may comprise at least one thermochromic material. Any thermochromic material that changes color in response to temperature fluctuations can be used for the baby products such as bottle and bottle holder disclosed herein. Some non-limiting examples of suitable thermochromic materials include liquid crystals, leuco dyes and combinations thereof.

In some embodiments, the thermochromic material comprises a thermochromic liquid crystal. Any thermochromic liquid crystal that is capable of displaying different colors at different temperatures can be used for the baby products disclosed herein. The thermochromic liquid crystal is generally reversible in that it can return to its initial state after a return to the initial temperature.

In some embodiments, the thermochromic liquid crystal goes through a change with temperature in crystal structure from a low-temperature crystal phase, through a twisted nematic phase, to the high-temperature isotropic liquid phase. In general, the nematic mesophase of such thermochromic liquid crystal has thermochromic properties. In the twisted nematic phase, the liquid crystal molecules orient in molecular layers having periodic spacing. When passing the twisted nematic phase, the light undergoes Bragg diffraction on the molecular layers. The wavelength of the light with the greatest constructive interference is reflected back and perceived as a specific color by human eyes. When the liquid crystal undergoes a change in temperature, thermal expansion may occur which may result in a change of spacing between the molecular layers, and thus the reflected color. In general, the thermochromic liquid crystal starts black below their temperature range; go through the spectral colors, like a rainbow, and then black again above the temperature range.

The temperature range of thermochromic liquid crystal generally depends on the nature of the liquid crystal. In some embodiments, the temperature range is from about -30 °C to about 130 °C; from about 0 °C to about 100 °C; from about 20 °C to about 95 °C; from about 25 °C to about 90 °C or from about 30 °C to about 85 °C. In other embodiments, the temperature range is from about 36 °C to about 75 °C. In further embodiments, the temperature range is from about 40 °C to about 60 °C.

Some non-limiting examples of suitable thermochromic liquid crystals include cholesteric liquid crystals, chiral nematic liquid crystals, smectic liquid crystals, cyanobiphenyls and combinations thereof. Some non-limiting examples of suitable cholesteric liquid crystals include cholesterol esters (e.g., cholesteryl nonanoate and cholesteryl benzoate), cholesterol alkyl carbonates (e.g., cholesteryl oleyl carbonate), cholesterol chloride, and combinations thereof.

Some suitable thermochromic liquid crystals for the baby products disclosed herein are described in U.S. Patent Nos. 6,652,778, 6,388,194, 6,294,258, 6,017,594, 5,805,245, 5,695,834, 5,418,640, 5,376,699, 5,223,958, 4,834,500, 4,741,859, 4,635,245, 4,425,161, 4,257,911, 4,195,916, 4,149,413, and 4,077,260; U.S. Patent Publication Nos. 2006/0137367 and 2003/0109329; PCT Patent Publication WO/2003/024267; and UK Patent Specification Nos. 1,596,013 and 1,596,014, all of which are incorporated herein by reference.

In some embodiments, the thermochromic material comprises a thermochromic dye system. The thermochromic dye systems are generally based on mixtures of leuco dyes with suitable other chemicals (e.g., weak acids, dissociable salts and solvents), displaying a color change (e.g., between a colorless leuco form and a colored form) in response to temperature fluctuations. The thermochromic dye systems are generally in the form of microcapsules with the mixture sealed inside. A non-limiting example of thermochromic dye system comprises microcapsules with a leuco dye, a weak acid, a dissociable salt and a solvent. In such a system, when the solvent is solid, the leuco dye exists in its leuco form, whereas when the solvent melts at an elevated temperature, the salt dissociates, the pH inside the microcapsule lowers, the leuco dye becomes protonated, and its absorption spectrum shifts drastically to a colored wavelength.

Some non-limiting examples of leuco dyes include spirolactones, fluorans, spiropyrans, fulgides and combinations thereof. Some non-limiting examples of suitable spiropyrans include 1',3',3'-trimethyl-6-nitrospiro[2H-benzo-pyran-2,2'-indoline]; 3-ethyl-3-phenyl-5'bromo-6'-nitro-8'-methoxy-indolino benzospiropyran; 3-ethyl-5-chloro-indolino benzospiropyran; 3-ethyl-5'-bromo-6'-nitro-8'-methoxy-indolino benzospiropyran; 3-ethyl-5'-nitro-8'-methoxy-indolino benzospiropyran; 3-ethyl-6',8'-dinitro-indolino benzospiropyran; 8,8'-dinitro-3,3'-spirobi[3H-naphtho[2,1-b]pyran]; 3-phenyl-8-methoxy-8'-nitro-dibenzospiropyran; 3-phenyl-6'nitro-8'iodo-dibenzospiropyran; 3-phenyl-6'-nitro-dibenzospiropyran; 3,5,3'-trimethyl-6'-nitro-benzoxazolino-benzospiropyran; 3,3'-dimethyl-6'-nitro-benzoxazolino-benzospiropyran and combinations thereof.

Some other non-limiting examples of leuco dyes include Michler's hydrol, Crystal Violet carbinol, Malachite Green carbinol, N- (2, 3-dichlorophenyl) -leuco auramine, N-benzoyl auramine, N-acetyl auramine, N-phenyl auramine, Rhodamine B lactam, 2-(phenyliminoethylidene)-3, 3- dimethyl-indoline, N, 3,3-trimethyl-indolinobenzo-spiropyran, 8'-methoxy-N, 3,3-trimethylindolino-spiropyran, 3- diethylamino-6-methyl-7-chloro-fluoran, 3-diethylamino-7- methoxy-fluoran, 3-dimethylamino-6-benzyloxy-fluoran, 1,2- benzo-6-diethylaminofluoran, 3,6-di-p-toluidino-4, 5- dimethylfluoran-phenylhydrazide-gamma. - lactam, 3-amino-5- phenyl-8-methyl-fluoran, 2-methyl-3-amino-6-methyl-7-methyl- fluoran, 2,3-butylene-6-di-n-butylamino-fluoran, 3- diethylamino-7-anilino-fluoran, 3-diethylamino-7- (p- toluidino) -fluoran, 7-acetamino-3-diethylamino-fluoran, 2- bromo-6-cyclohexylamino-fluoran, 2,7-dichloro-3-methyl-6-n- butylamino-fluoran and combinations thereof.

Some other non-limiting examples of leuco dyes include diaryl phthalides, polyaryl carbinols, leuco auramines, lactum leuco compounds, indolines, spiropyrans and fluoranes, and one or more electron-donating chromatic organic compounds selected from the group consisting of diaryl phthalides, indolyl phthalides, polyaryl carbinols, leuco auramines, acyl auramines, aryl auramines, Rhodamine B lactam, indolines, spiropyrans and fluorans, and one or more electron-donating, chromatic organic compounds selected from the group consisting of diaryl phthalides, aryl phthalides, indolylphthalides, polyarylcarbinols, leucoauramines, acrylauramines, arylauramines, rhodamine B lactams, indolines, spiropyrans, fluorans, thiofluorans, phenothiazines, triphenylmethanes, diarylarylfurans, spiroxanthenearylfurans, and chromenoindoles.

Some other non-limiting examples of leuco dyes include 3-amino-5-methylfluoran, 3-diethylamino-6-methyl-7- dimethylamino-thiofluoran, 3-diethylamino-7-dibenzylamino- thiofluoran, 3, 3-bis (1-ethyl-2-methyl-3-yl) phthalide, 3,3- bis (2-phenylindol-3-yl) phthalide, 3- (4-diethylaminophenyl)- 3- (1-ethyl-2-methylindol-3-yl) phthalide, 3- (4-di-n- butylaminophenyl)-3- (2-phenylindol-3-yl) phthalide, 3- (duroridine-6'-yl)-3- (1'-methyl-2'-phenylindol-3'- yl) phthalide, 3- (1', 2', 3', 4'-tetrahydroquinolin-6'-yl) 3-(1'-ethyl-2'-methyl-indol-3'-yl) phthalide, 3,3-bis (1-ethyl- <BR> <BR> <BR> 2-methyl-indol-3-yl) -7-azaphthalide, 3- (diphenylamino)-3- (1- ethyl-2-methylindol-3-yl) phthalide, 3-[N- (4-ethoxyphenyl) N- phenylamino]-3- (1-ethyl-2-methylindol-3-yl) phthalide, 3- [4-(dimethylamino) phenyl]-3- [N, N-bis- (4- octylphenyl) amino] phthalide, 3- [4-(ethylbenzylamino) phenyl]-3- [N- (4-ethoxyphenyl) N- phenylamino] phthalide, 2,2-bis (p-N, N-dimethylaminophenyl) 2- H-naphtho [1, 8-bc] furan, spiro-3,6-bis (dimethylamino) xanthen-9, 2- (2H)-naphtho [1, 8-bc] furan, 6,6-bis (4- dimethylaminophenyl)-6H-chromeno [4, 3-b] indole and the like.

Some of the leuco dyes are described in U.S. Patent Nos. 4,028,118, 4,421,560 and 4,421,561, all of which are hereby incorporated by reference.

The weak acid can be any proton donor that can change the leuco dye molecule between its leuco form and its protonated colored form. Some non-limiting examples of suitable weak acids include bisphenol A, parabens, 1,2,3-triazole derivatives (such as 1,2,3-benzotriazole and 1,2,3-triazole ethyl 4-methyl-5-carboxylate), octyl phydroxybenzoate and 4-hydroxycoumarin and derivatives thereof. Strong acids, such as sulfuric acid, would make the change irreversible.

The solvent can be any solvent having a melting point at which a color change is desired. In some embodiments, the solvent is a polar solvent. Some non-limiting examples of suitable solvents include silicone oil, toluene, xylene, mesitylene, butyl ether, ethyl acetate, ethyl alcohol, benzene, acetone, n-propanol, isopropanol, dimethyl phthalate, chloroform, benzyl alcohol, nitrobenzene, cyclohexane, decalin, cyclohexanone, isoamyl alcohol, glycol, diphenyl ether, pyridine, water, acetonitrile, dimethyl formamide, polystyrene, polymethylmethacrylate, paradioxane, polyvinyl alcohol and combinations thereof.

The temperature range of thermochromic dye system generally depends on the nature of the liquid crystal. In some embodiments, the temperature range is from about -10 °C to about 100 °C; from about 0 °C to about 90 °C; from about 10 °C to about 80 °C; from about 15 °C to about 70 °C or from about 20 °C to about 65 °C. In further embodiments, the temperature range is from about 36 °C to about 60 °C.

In some embodiments, the temperature and sensitivity of coloration/decoloration of the thermochromic dye system can be controlled by mixing one or more compounds selected from the group consisting of alcohols, esters, ketones, esters, acid amides and carboxylic acids.

Optionally, the thermochromic dye system contains at least one additive selected from the group consisting of ultraviolet absorbers, visible light absorbers, antioxidants, singlet oxygen quenchers, superoxide anion quenchers and combination thereof. Some non-limiting examples of suitable superoxide anion quenchers include super oxide dimustase, complexes of cobalt (III) and nickel (II), and combination thereof.

Some non-limiting examples of suitable ultraviolet absorbers include 2,4-dihydroxybenzophenone, 2-hydroxy-4-methoxybenzophenone, 2-hydroxy-4-octoxybenzophenone, 2-hydroxy-4-dodecyloxybenzophenone, 2-hydroxy-4-octadecyloxybenzophenone, phenyl salicylate, p-tertbutylphenyl salycilate, p-octylphenyl salycilate, 2-(2'-hydroxy-5'-methyl-phenyl)benzotriazole, 2-(2'-hydroxy-3',5'-di-tertbutylphenyl)benzotriazole, 2-(2'hydroxy-8'tert-butyl-1',5'-methylphenyl)5-chlorobenzotriazole, 2-(2'-hydroxy-3',5'-di-tertbutylphenyl)-5-chlorobenzotriazole, 2-(2'-hydroxy-3',5'-tertbutylphenyl)-5-chlorobenzotriazole, 2-(2'-hydroxy-4'-octoxyphenyl)benzotriazole, 2'-ethylhexyl-2-cyano-8-phenyl cinnamate, resorcinol monobenzoate, and combination thereof.

Some non-limiting examples of suitable visible light absorbers include monoazo-, bisazo-, metal complex salt type monoazo-, anthraquinone-, phthalocyanine- and triphenylmethane-based dyes, and monoazo-, bisazo-, metal complex salt type monoazo-, anthraquinone-, indigo-, thioindigo-, phthalocyanine-, triphenylmethane- and xanthene-based pigments, and combination thereof.

Some non-limiting examples of suitable antioxidants include 2,6-di-tert-butyl-4-methylphenol, 2,4,6-tri-tert-butylphenol, 2,2'-methylenebis(4-methyl-6-tert-butylphenol), 4,4'-isopropylidene-bisphenol, 2,6-bis(2'-hydroxy-3'-tert-butyl-5'-methylbenzyl)-4-methylphenol, 4,4'-thiobis-(3-methyl-6-tertbutylphenol), tetrakis[methylene(3,5-di-tert-butyl-4-hydroxyhydrocinnamate)] methane, p-hydroxyphenyl-3-naphthylamine, 2,2,4-trimethyl-1,2-dihydroxyquinoline, thiobis(.beta.-naphthol), mercaptobenzothiazole, mercaptobenzimidazole, aldol-.alpha.-naphthylamine, bis-(2,2,6,6-tetramethyl-4-piperidyl)sebacate, 2,2,6,6-tertramethyl-4-pipe ridylbenzoate, dilauryl-8,8'-thiodipropionate, distearyl-8,8'-thiodipropionate, tris(4-nonylphenol)phosphite, and combination thereof.

Some non-limiting examples of suitable singlet oxygen quenchers include 1,4-diazabicyclo [2,2,2]octane (DABCO), .beta.-carotene, 1,3-cyclohexadiene, 2-diethylaminomethylfuran, 2-phenylaminomethylfuran, 9-diethylaminomethylanthrathene, 5-diethylaminomethyl-6-phenyl-3,4-dihydroxypyran, nickel dimethyl dithiocarbamate, nickel dibutyl dithiocarbamate, nickel 3,5-di-tert-butyl-4-hydroxybenzyl o-ethylphosphate, nickel 3,5-di-tert-butyl-4-hydroxybenzyl o-butylphosphate, nickel-[2,2'-thiobis(4-tertoctylphenolate)](n-butylamine), nickel [2,2'-thiobis(4-tertoctylphenolate](2-ethylhexylamine), nickel bis[2,2'-thio-bis(4-tert-octylphenolate)], nickel bis[2,2'-sulfone-bis(4-octylphenolate)], nickel bis-(2-hydroxy-5-methoxyphenyl-N-n-butylaldoimine), nickel bis-(dithiobenzyl), nickel bis(dithiobiacetyl), and combination thereof.

In some embodiments, the thermochromic material comprises an inorganic thermochromic pigments such as VO₂, Cu₂HgI₄, V₂O₃Ag₂S, SmS, VO, Ag₂Se, Ag₂Te, Cu₂S, ZnO, PbO, HgI₂, NiSO₄, CdₓZn₁₋ₓS_{y}Se_{1-y}(x is from 0.5 to 1, y is from 0.5 to 1), ZnₓCd_{y}Hg₁₋ₓ-_{y}OₐSbSe_{c}Te_{1-a-b-c} (x is from 0 to 0.5, y is from 0.5 to 1, a is from 0 to 0.5, b is from 0.5 to 1, c is from 0 to 0.5), HgₓCd_{y}Zn_{1-x-y}SbSe_{1-b} (x is from 0 to 1, y is from 0 to 1, b is from 0.5 to 1), or a combination thereof.

The temperature indicator or the thermochromic material may be in a wide variety of forms, including microcapsule, ink, paint, paper, strip, powder, slurry, epoxy, master batch, and the like. In some embodiments, the temperature indicator or the thermochromic material is in the form of microcapsules wherein the thermochromic material is microencapsulated in a small droplet with a protective wall around. In other embodiments, the temperature indicator or the thermochromic material is in the form of inks or dyes. In further embodiments, the temperature indicator is in the form of paint. In still further embodiments, the temperature indicator is in the form of paper. The thermochromic paper is generally impregnated with a thermochromic material. In still further embodiments, the temperature indicator is in the form of a strip comprising a thermochromic material and a polymeric binder.

The baby products disclosed herein may be made of any suitable materials. In some embodiments, the teat portion or the teat assembly is made of resilient materials, including, but not limited to natural rubber, thermoplastic rubber, latex rubber, silicone, or any other desired thermoset plastic or thermoplastic elastomer, or combinations thereof.

In some embodiments, each part of the baby products can be made of any suitable materials, including but not limited to polyethylene (PE), high-density polyethylene (HDPE), low-density polyethylene (LDPE), polyethylene terephthalate (PET), polypropylene (PP), polycarbonate, poly vinyl chloride (PVC), thermoplastic elastomer (TPE), silicone, glass, fiber glass, clay, ceramics, metal, recycled materials, or combinations thereof.

Every part of the baby products disclosed herein may optionally comprise a silicone composition. The silicone composition may comprise a silicon-containing polymer or pre-polymer that can be cured or cross-linked to form a silicon-containing polymer. One of the common silicon-containing polymers is silicone. Silicone is also known as polymerized siloxanes or polysiloxanes. Some non-limiting examples of silicone include polydimethylsiloxane, polymethylhydrosiloxane, fluorosilicones, phenylmethyl-dimethyl silicones, and the like. Silicones have the chemical formula -[Si(R)₂-O]ₙ-, where R is one or more organic groups such as methyl, ethyl, and phenyl and n refers to the number of the repeating units in the backbone of the silicone polymer. In some embodiments, organic side groups can be used to link two or more -Si-O- backbones together. By varying the -Si-O-chain lengths, side groups, and crosslinking, silicones can be synthesized with a wide variety of properties and compositions.

Silicone generally is a flexible material that is widely used for gaskets, heat shields, fire stops, seals, cushions and insulation. Hardened silicone has a high temperature resistance (up to about 320 °C), excellent sealability, UV and ozone resistance, and excellent recovery after compression. Furthermore, silicone is extremely resilient to mechanical fatigue, meaning that the material can be flexed repeatedly without losing strength or elasticity. Silicone maintain their mechanical properties over a wide range of temperatures and the presence of hydrocarbon side chains in silicone rubbers makes these materials extremely hydrophobic. Because of its anti-sticking, low chemical reactivity, and low toxicity, silicone is an excellent choice for bakewares and cookwares such as steamers.

Silicone can vary in consistency from liquid to gel to rubber to hard plastic. The most common silicone is linear polydimethylsiloxane (PDMS), which is silicone oil. Another common group of silicone materials includes silicone rubbers or resins, which are generally formed by branched and/or cage-like oligosiloxanes.

In some embodiments, the silicone composition disclosed herein comprises a silicon-containing polymer such as a silicone rubber, a liquid silicone rubber (LSR), fluorosilicone rubber, silicone-modified ethylene propylene rubber (SEP rubber), silicone polyester resin, silicone alkyd resin, silicone epoxy resin, or a combination thereof. In some embodiments, the silicone rubber disclosed herein is a one-component RTV rubber, a two-component RTV rubber, a silicone rubber compound, or a combination thereof.

In some embodiments, the silicone composition disclosed herein comprises a silicone rubber. Any conventional silicone rubber can be used herein. In some embodiments, the silicone rubber has the general formula (I):

RₐSiO_{(4-a)/2} (I)

where R is a substituted or unsubstituted monovalent hydrocarbon radical having 1 to 10 carbon atoms and is a positive number having a value of from about 1.95 to about 2.05. In some embodiments, each R is independently alkyl such as methyl, ethyl, propyl, and butyl; alkenyl such as vinyl, allyl, and butenyl; aryl such as phenyl and tolyl; or substituted alkyl, alkenyl or aryl where one or more of the hydrogen atoms attached to the carbon atoms of the alkyl, alkenyl or aryl are substituted with halogen atoms, cyano, chloromethyl, chloropropyl, 3,3,3-trifluoropropyl, 2-cyanoethyl or the like. The radicals represented by R may be the same or different. In certain embodiments, a of formula (I) is 2.

In certain embodiments, the silicone rubber has the general formula (II): 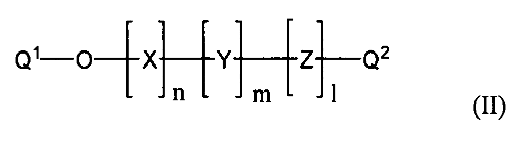 wherein each of Q¹ and Q² independently is monovalent radical having one of the following formulae: 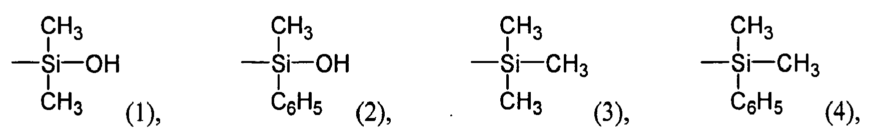 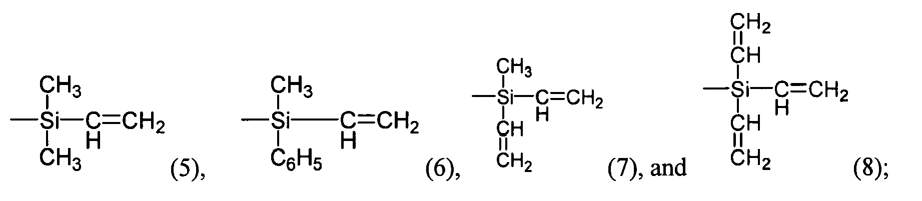 each of X, Y and Z independently is a divalent radical having one of the following formulae: 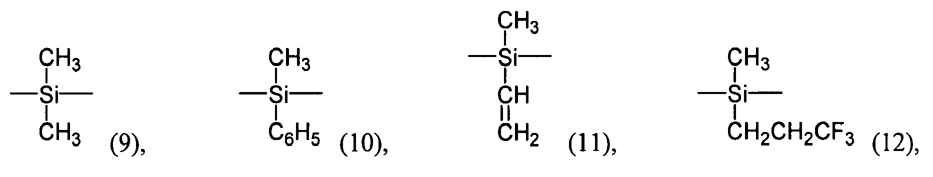 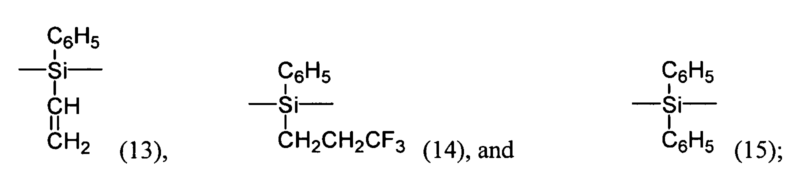 and each of n, m, and 1 is independently an integer from 0 to 10,000.

In some embodiments, the silicone rubber has formula (II) where 1 is 0 and X is divalent radical (9); and Y is divalent radical (11). In other embodiments, the silicone rubber has formula (II) where X is divalent radical (10); Y is divalent radical (9); and Z is divalent radical (11). In other embodiments, the silicone rubber has formula (II) where X is divalent radical (12); Y is divalent radical (9); and Z is divalent radical (11).

Generally, silicone rubber offers excellent resistance to extreme temperatures and can be used in a temperature range from about -55 °C to about 300 °C. In such temperature range, their tensile strength, elongation, tear strength and compression set can be superior to conventional natural or synthetic organic rubbers.

In general, silicone rubber is a highly inert material and does not react with most chemicals. Further, silicone rubber has higher resistances to ozone, UV light, heat, humidity, and other aging factors than any organic rubber. This chemical inertness makes silicone rubber the material of choice in medical applications and applications in extreme environments.

There are also many special grades and forms of silicone rubber, including: Steam resistant, metal detectable, glow-in-the-dark, electrically conductive, chemical/oil/acid/gas resistant, low smoke emitting, and flame-retardant.

In some embodiments, the silicone composition disclosed herein comprises a silicone rubber, such as general purpose silicone rubbers, one-component RTV silicone rubbers and two-component RTV silicone rubbers. Any conventional silicone rubbers known to skilled artisans can be used herein. The silicone rubber can be milled with at least one additive such as colorants and cross-linking agents to form a silicone composition. The silicone composition can then be extruded or injected into a mold under pressure and then processed into silicone articles such as steamers and tagines. Generally, the machine pressure on the mold can be from about 20 Kg to about 300 Kg, from about 40 Kg to about 275 Kg, from about 50 Kg to about 250 Kg, from about 60 Kg to about 200 Kg, or from about 70 Kg to about 175 Kg.

Optionally, heat can be applied to vulcanize or cure the silicone composition or article. Generally, the heat cure can be carried out in a two stage process at the mold to form the desired shape first, and then in a prolonged post-cure process after the article is removed from the mold. Generally, the curing temperature at the mold is from about 120 °C to about 200 °C, from about 140 °C to about 180 °C, or from about 150 °C to about 170 °C. The curing time at the mold can be from about 10 seconds to about 500 seconds, from about 25 seconds to about 400 seconds, from about 50 seconds to about 300 seconds, from about 75 seconds to about 200 seconds, or from about 100 seconds to about 150 seconds.

The post-cure temperature generally is from about 150 °C to about 300 °C, from about 160 °C to about 275 °C, from about 170 °C to about 250 °C, or from about 180 °C to about 225 °C. The post-cure time can be from about 10 minutes to about 24 hours, from about 20 minutes to about 16 hours, from about 30 minutes to about 10 hours, from about 1 hour to about 8 hours, or from about 2 hours to about 6 hours. In some embodiments, the curing temperature at the mold is from about 155 °C to about 165 °C. In other embodiments, the post-cure temperature is from about 200 °C to about 210 °C. In further embodiments, the curing time is from about 120 seconds to about 140 seconds. In still further embodiments, the post-cure time is from about 3 hours to about 5 hours.

Some non-limiting examples of suitable silicone rubbers for general purposes include KE-541-U, KE-551-U, KE-571-U, KE-581-U, KE-555-U, KE-575-U, KE-520-U, MF940U, MF950U, MF960U, and MF970U. Some non-limiting examples of suitable one-component RTV silicone rubber include KE-41, KE-42, KE-44, KE-45, KE-441, KE-445, and KE-45S. Some non-limiting examples of suitable two-component RTV silicone rubber include KE-12, KE-14, KE-17, KE-108, KE-111, KE-1222, KE-1241, KE-1414, KE-1415, KE-1416, KE-1417, KE-1314, KE-1600, KE-1603, and KE-1606. All of the above-mentioned silicone rubbers are obtainable from Shin-Etsu Chemical Co., Ltd., Tokyo, Japan.

In some embodiments, the silicone composition disclosed herein comprises a liquid silicone rubber (LSR). Any conventional LSR can be used herein. Liquid silicone rubber is a cured silicone with low compression, great stability and ability to resist extreme temperatures such as from about -55 °C to about 300 °C. A variety of liquid silicone rubbers are available with a wide range of physical properties and that can be tailored to specific applications. Liquid silicone rubber may be addition-crosslinked by hydrosilylation in the presence of a platinum catalyst to form a silicone elastomer. Liquid silicone rubber compositions may be formed by mixing four essential ingredients: a substantially linear silicone polymer, one or more reinforcing filler(s) and optionally one or more non-reinforcing filler(s), a cross-linking agent, and a hydrosilylation catalyst. The mechanical properties, such as tensile strength, elongation, tear strength, and compression set, of the liquid silicone rubber compositions may be evaluated. Silicone articles, such as silicone steamers and tagines, may be formed from the liquid silicone rubber compositions by a liquid injection molding system (LIMS). Liquid injection molding (LIM) is a process that involves an integrated system for proportioning, mixing, and dispensing a liquid resin formulation and directly injecting the liquid resin formulation into a mold which is clamped under pressure. In some embodiments, a two-part liquid silicone composition comprising a liquid silicone rubber, a catalyst, a crosslinker and optionally at least one additive is directly delivered into a mixer for homogenization. The homogenized mix is then injected directly into heated mold cavities in a period ranging from about 2 to about 30 seconds, or from about 3 to about 10 seconds. Vulcanization or curing occurs inside the mold cavities a period ranging from about 1 second to about 90 seconds, or from about 5 seconds to about 90 seconds.

Any LIMS known to skilled artisans can be used herein. In some embodiments, silicone articles, such as silicone steamers and tagines, can be prepared by a high-precision injection molding machine where all steps are automated, from mixing to molding. The automated system may save labor and time, and make it easy to produce high-quality molded articles. LIMS may provide some advantages over other polymer processing methods. For example, it may save time because the cure speed is fast and molding time can be reduced, especially when addition-cure liquid silicones are used. Furthermore, the liquid injection molding can be done at low injection pressures because the materials are liquids.

The LIMS is suitable for molding high-precision components and flashless, runnerless molding. Because molded silicone articles release easily from the molds after curing, the molding process can be automated. The system is environmentally friendly, as there are no byproducts generated during curing. With flashless and runerless molding, there is no need to process waste material, meaning a more environmentally friendly manufacturing process.

Some non-limiting examples of suitable liquid silicone rubbers include KEG-2000-40 (A/B), KEG-2000-50 (A/B), KEG-2000-60 (A/B), KEG-2000-70 (A/B), KEG-2001-40 (A/B), KEG-2001-50 (A/B), which are suitable for fast cure, transparent, and high strength applications; KE-1950-10 (A/B), KE-1950-20 (A/B), KE-1950-30 (A/B), KE-1950-35 (A/B), KE-1950-40 (A/B), KE-1950-50 (A/B), KE-1950-60 (A/B), KE-1950-70 (A/B), which are suitable for transparent and high strength applications; KE-1935 (A/B), KE-1987 (A/B), KE-1988 (A/B), which are suitable for high transparency applications; and KE-2014-30 (A/B), KE-2014-40 (A/B), KE-2014-50 (A/B), KE-2014-60 (A/B), which are suitable for oil bleed applications. All of the above-mentioned liquid silicone rubbers are obtainable from Shin-Etsu Chemical Co., Ltd., Tokyo, Japan.

In some embodiments, the silicone composition disclosed herein comprises a fluorosilicone rubber. Any conventional fluorosilicone rubber can be used herein. Flurosilicone rubber generally has a high resistance to extreme temperatures and chemicals, and has excellent workability. Flurosilicone rubber also has an excellent resistance to solvent, oil or silicone fluid. Some non-limiting examples of suitable fluorosilicone rubbers include the FE-201-U Series for general molding purposes and the FE-301-U Series for high strength applications, all of which are obtainable from Shin-Etsu Chemical Co., Ltd., Tokyo, Japan. Other non-limiting examples of suitable fluorosilicone rubbers include FE-251-U, FE-261-U, FE-271-U, FE-351-U, FE-361-U, and FE-451-U, all of which are obtainable from Shin-Etsu Chemical Co., Ltd., Tokyo, Japan.

In some embodiments, the silicone composition disclosed herein comprises a silicone-modified ethylene propylene rubber (SEP rubber). Any conventional SEP rubber can be used herein. SEP rubber is produced by modifying ethylene propylene rubber (EPDM) with silicone. The modification improves the heat resistance, weather resistance, and low temperature characteristics of EPDM's. These properties of SEP rubber generally lie between those of EPDM and silicone rubber, but SEP rubber has the additional favorable properties of chlorine resistance and sponge foaming characteristics. In high temperature conditions over 100 °C, SEP rubber generally has a higher mechanical strength, in particular tear strength, than EPDM, and is comparable to high-strength silicone rubber. In terms of resistance to steam, hot water, acids, and alkalis, SEP rubber is generally more durable than silicone rubbers. SEP rubbers are available in several grades, e.g., general grade, heat-resistant grade, extrusion grade, flame-resistant grade, and solar grade. Some non-limiting examples of general grade SEP rubbers include SEP-1711-U and SEP-1411-U. Some non-limiting examples of heat-resistant grade SEP rubbers include SEP-1721-U, SEP-1421-U, and SEP-855B-U. One non-limiting example of extrusion grade SEP rubber includes SEP-1731-U. One non-limiting examples of flame-resistant grade SEP rubber includes SEP-363-U. One non-limiting examples of solar grade SEP rubber includes SEP-1631-U. All of the above SEP rubbers are obtainable from Shin-Etsu Chemical Co., Ltd., Tokyo, Japan.

In some embodiments, the silicone composition disclosed herein comprises a silicone polyester resin, silicone alkyd resin, or silicone epoxy resin. Any conventional silicone polyester resin, silicone alkyd resin and silicone epoxy resin known by skilled artisans can be used herein. Some non-limiting examples of silicone polyester resins include KR-5230 and KR-5230, obtainable from Shin-Etsu Chemical Co., Ltd., Tokyo, Japan. One non-limiting example of silicone alkyd resin includes KR-5206, obtainable from Shin-Etsu Chemical Co., Ltd., Tokyo, Japan. Some non-limiting examples of silicone epoxy resins include ES-1001N, ES-1002T, and ES-1023, obtainable from Shin-Etsu Chemical Co., Ltd., Tokyo, Japan.

In some embodiments, the mechanical properties and/or physical properties of the silicone composition can be modified or improved by adding one or more non-silicon containing rubber materials, such as natural rubber, synthetic rubber or a combination thereof. Some non-limiting examples of suitable synthetic rubbers include the butadiene polymers such as polybutadiene; isobutylene rubber (butyl rubber); ethylene-propylene rubber; neoprene (polychloroprene); polyisoprene; copolymers of 1,3-butadiene or isoprene with monomers such as styrene, acrylonitrile and methyl methacrylate; ethylene/propylene/diene (EPDM) rubbers such as ethylene/propylene/dicyclopentadiene terpolymers. Non-limiting examples of suitable butadiene polymers include those polymers having rubber-like properties, prepared by polymerizing butadiene alone or with one or more other polymerizable ethylenically unsaturated compounds, such as styrene, methylstyrene, methyl isopropenyl ketone and acrylonitrile. In some embodiments, the butadiene may be present in the mixture in an amount of at least 40 wt.%, based on the total amount of the polymerizable materials.

Optionally, the silicone composition may comprise one or more suitable additives such as cross-linking or curing agents, colorants (e.g., pigments and dyes), catalysts, fillers, reinforced materials, dispersants, surfactants, wetting agents, coupling agents, lubricants, accelerators, rheology modifiers, thickeners, adhesion promoters, plasticizers, age resisters, anti-oxidants, antifoaming agents, blocking agents, antistatic agents, anti-mildew agents, handling agents, acid acceptors, UV stabilizers, anti-adhesive agents, blowing agents, fire retardants, desiccants, and the like. The mechanical properties such as compression set, tensile strength and flexibility of the silicone composition disclosed herein can be adjusted by controlling, *inter alia,* the type and amount of the silicon-containing polymer, the curing agent, the filler and/or the reinforced material.

The cross-linking or curing agent can be a peroxide, metallic salt or a combination thereof. Some non-limiting examples of suitable cross-linking or curing agent include organic peroxides such as acyl peroxides (e.g., acetyl and benzoyl peroxides), alkyl peroxides (e.g., t-butyl peroxide and cumyl peroxide), dicarbonates, hydroperoxides (e.g., t-butyl hydroperoxide and cumyl hydroperoxide), peresters (e.g., t-butyl perbenzoate), azo compounds (e.g., 2,2'-azobisisobutyronitrile), disulfides, tetrazenes and combinations thereof.

Other non-limiting examples of suitable organic peroxide include monochlorobenzoyl peroxide, p-methylbenzyol chloride, 2,4-dichlorobenzoyl peroxide, t-butyl perbenzoate, dicumyl peroxide, 2,5-bis(t-butylperoxy)-2,5-dimethylhexane, 2,5-bis(t-butylperoxy)-2,5-dimethylhexine. Some non-limiting examples of suitable dicarbonates include dimyristyl peroxydicarbonate and dicyclododecyl peroxydicarbonate, t-butyl monoperoxycarbonates, and compounds having formula (III): 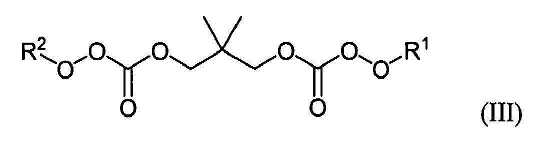 wherein each of R¹ and R² is independently alkyl having about 3 to about 10 carbon atoms.

Some suitable commercially available cross-linking or curing agents include C-1A, C-3, C-4, C-8, C-8A, C-8B, C-10, C-15, C-16, C-23, C-25A/B, and SHK-158, all of which are obtainable from Shin-Etsu Chemical Co., Ltd., Tokyo, Japan.

In some embodiments, the amount of the cross-linking or curing agent ranges from about 0.2 parts to about 5 parts, from about 0.3 parts to about 4 parts, from about 0.4 parts to about 3 parts, from about 0.5 parts to about 2.5 parts, from about 0.5 parts to about 2.5 parts, from about 0.75 parts to about 2 parts, or from about 1.25 parts to about 1.75 parts per 100 parts of the silicon composition. In other embodiments, the amount of the cross-linking or curing agent is at most about 0.5 parts, at most about 0.75 parts, at most about 1.0 part, at most about 1.5 parts, at most about 2.0 parts, or at most about 3.0 parts per 100 parts of the silicon composition. In further embodiments, the amount of the cross-linking or curing agent is at least about 0.1 parts, at least about 0.2 parts, at least about 0.3 parts, at least about 0.4 parts, at least about 0.5 parts, or at least about 0.6 parts per 100 parts of the silicon composition.

In some embodiments, the silicone composition can be cured by a conventional addition reaction curing agent. Some non-limiting examples of suitable addition reaction curing agent include organohydrogenpolysiloxanes having at least two or at least three Si-H groups in a molecule. Some non-limiting examples of suitable organohydrogenpolysiloxanes include methylhydrogenpolysiloxane and copolymers of methylhydrogenpolysiloxane and dimethylpolysiloxane. In general, the organohydrogenpolysiloxane can be blended in the silicone composition in an amount from about 0.5 moles to about 3 moles of Si-H groups per mole of alkenyl group in the silicone composition.

Generally, a catalyst can be used together with the addition reaction curing agent. Some non-limiting examples of suitable catalysts include chloroplatinic acid, alcohol-modified products of chloroplatinic acid, complexes of chloroplatinic acid with ethylene or propylene, and complexes of chloroplatinic acid with vinylsiloxane. The addition reaction catalyst can be blended to give from about 0.1 ppm to 1,000 ppm, or from about 1 ppm to about 500 ppm of platinum metal, based on the total weight of the silicone composition.

The silicone composition may include a sulfur vulcanizing agent, especially where the silicone composition comprises a natural rubber or a synthetic rubber. Examples of suitable sulfur vulcanizing agents include elemental sulfur or sulfur donating vulcanizing agents. In some embodiments, the sulfur vulcanizing agent is elemental sulfur. Other cross-linking agents may also be used.

In some embodiments, the silicone composition further comprises a reinforced material. Any rubber reinforced material that can strengthen silicone composition can be used, including, but not limited to, polyesters, polyamides (e.g., nylons and aramid), polyvinyl alcohol, carbon, glass, steel (brass, zinc or bronze plated), polybenzoxazole, rayon, and other organic or inorganic compositions. These rubber reinforced materials may be in the form of a filament, fiber, thread, cord, sheet or fabric. In some embodiments, the rubber reinforced material comprises glass fibers. In some embodiments, the rubber reinforced material is a fiber sheet comprising one or more fibers that is stable in the temperature ranges to be used. The reinforced fiber material may be nylon, polyester, aramid, acrylic, polyurethane, olefin, polylactide, fiberglass, airlaid fabrics, and the like. In other embodiments, the reinforced glass fiber is coated with adhesion promoters and liquid silicone prior to use.

The silicone composition may also comprise one or more colorants. Any conventional colorants may be used herein. Some non-limiting examples of suitable colorants include KE-Color BR, KE-Color W, KE-Color MB, KE-Color BL, KE-Color SB, X-93-941, and X-93-942, obtainable from Shin-Etsu Chemical Co., Ltd., Tokyo, Japan. Some non-limiting examples of suitable colorants include ZSB 336, ZSA 101, ZSZ924, ZSA101, ZSB216, ZSB630, ZSB631, ZSB632, ZSB633, and ZSB634, obtainable from Holland Colours China Ltd. The colorant can used individually or in combination with one or more other colorants to provide all possible colors, shades or hues for the silicone articles disclosed herein. Some non-limiting examples of suitable colors include red, orange, yellow, green, blue, indigo, purple, pink, silver, gold, bronze, brown, black, gray, pale champagne, white, and all known shades and hues thereof.

Optionally, the silicone composition may comprise one or more fillers. Any conventional filler for silicone compositions may be used herein. Some non-limiting examples of suitable fillers include metal oxides, metal nitrides, metal carbonates, metal silicates, metal powder, pulverized mica, aluminum hydroxide, carbon black, asbestos, glass wool, and combinations thereof. Some non-limiting examples of suitable metal oxides include silica, alumina, titania, magnesium oxide, barium oxide, cerium oxide, zinc oxide, iron oxide and the like. Some non-limiting examples of suitable metal nitrides include boron nitride, aluminum nitride, silicon nitride, silicon carbide, and the like. Some non-limiting examples of suitable metals include aluminum, copper, silver and the like. Some non-limiting examples of suitable metal carbonates include calcium carbonate, zinc carbonate and the like. Some non-limiting examples of suitable metal silicates include aluminum silicates, magnesium silicates, zinc silicates, iron silicates and the like. Some non-limiting examples of suitable carbon black include acetylene black, furnace black, channel black and the like.

In some embodiments, the filler is silica in the form of finely divided powder. The filler may be added for the purposes of modifying the properties and/or processability of the silicone composition. Some non-limiting examples of suitable silica include fumed silica, wet milled silica, and powder of fused silica, finely divided quartz, diatomaceous earth, and mixtures thereof. The fumed silica or wet milled silica can be surface-treated to form hydrophobic silica. In some embodiments, the surface area of the silica filler is at least about 1 m²/g, at least about 10 m²/g, at least about 20 m²/g, at least about 30 m²/g, at least about 40 m²/g, or at least about 50 m²/g, as measured by the BET (Brunauer-Emmet-Teller) method of measuring surface area, as described by S. Brunauer, P. H. Emmett, and E. Teller, Journal of the American Chemical Society, 60, 309 (1938), which is incorporated herein by reference. In other embodiments, the surface area of the silica filler is from about 1 m²/g to about 500 m²/g, from about 2 m²/g to about 400 m²/g, from about 5 m²/g to about 300 m²/g, from about 10 m²/g to about 200 m²/g, or from about 25 m²/g to about 100 m²/g, as measured by the BET method.

The finely divided silica filler can be added to the silicone composition disclosed herein in an amount from about 1 part to about 30 parts by weight, from about 2 parts to about 15 parts by weight, or from about 3 parts to about 10 parts by weight, based on 100 parts by weight of the silicone composition.

Optionally, the silicone composition comprises a dispersant. Any dispersant that can disperse the filler uniformly in the silicone composition can be used. Some non-limiting examples of suitable dispersants include organosilazanes (e.g., hexamethylsilazane) or organosilanes.

Optionally, the silicone composition comprises a flame retardant. Some non-limiting examples of suitable flame retardants include hydrated aluminum hydroxide, zinc borate, metal silicates such as wollastonite, platinum and platinum compounds.

Optionally, the silicone composition comprises an adhesion promoter. Some non-limiting examples of suitable adhesion promoters include alkoxy silanes such as aminoalkylalkoxy silanes, epoxyalkylalkoxy silanes, for example, 3-glycidoxypropyltrimethoxysilane and, mercapto-alkylalkoxy silanes and γ-aminopropyl triethoxysilane, reaction products of ethylenediamine with silylacrylates. isocyanurates containing silicon groups such as 1,3,5-tris(trialkoxysilylalkyl) isocyanurates may additionally be used. Further suitable adhesion promoters are reaction products of epoxyalkylalkoxy silanes such as 3-glycidoxypropyltrimethoxysilane with amino-substituted alkoxysilanes such as 3-aminopropyltrimethoxysilane and optionally alkylalkoxy silanes such as methyl- trimethoxysilane, epoxyalkylalkoxy silane, mercaptoalkylalkoxy silane, and derivatives thereof.

The silicone composition may also comprise one or more accelerators. Accelerators can be used to control the time and/or temperature required for the vulcanization and to improve the properties of the vulcanizate. Suitable accelerators include, but are not limited to, amines, disulfides, guanidines, thioureas, thiazoles, thiurams, sulfenamides, dithicarbonates and zanthates. In some embodiments, the primary accelerator is a sulfenamide such as N,N-dicylohexyl-2-benzenethiazole sulfenamide. Any cobalt compound that can promote the adhesion of rubber to metal, such as stainless steel, may be used. Suitable cobalt compounds include, but are not limited to, cobalt salts of fatty acids and other carboxylic acids, such as stearic acid, palmitic, oleic, linoleic, and the like; cobalt salts of aliphatic or alicyclic carbocylic acids having 6 to 30 carbon atoms such as cobalt neodecanoate; cobalt salts of aromatic carbocylic acids such as cobalt naphthenate; cobalt halides such as cobalt chloride; and organo-cobalt-boron complexes such as MANOBOND^{®} 680C from OM Group, Inc., Cleveland, Ohio.

The silicone composition may be prepared by uniformly mixing the above-described components in a rubber mixer such as a two-roll mill, Banbury mixer, dough mixer or kneader and optionally effecting heat treatment under atmospheric pressure or in vacuum. In some embodiments, the silicone composition can be prepared by charging the ingredients into a kneading means such as a kneader and the mixture then kneaded at room temperature, and finally subjected to a heat treatment at about 100 °C to about 200 °C for about 15 minutes to about 8 hours. Alternatively, the ingredients can be mixed by a Banbury mixer at an elevated temperature such as about 160 °C or higher and the mixture can subsequently be cooled down to room temperature.

The silicone compositions disclosed herein can be used to prepare silicone articles by known polymer processing techniques such as extrusion, injection molding, rotational molding, and molding. In some embodiments, the silicone articles are prepared by injection molding using the silicone composition disclosed herein. In other embodiments, the silicone articles are prepared by extrusion using the silicone composition disclosed herein. In further embodiments, the silicone articles are prepared by molding using the silicone composition disclosed herein. In additional embodiments, the silicone articles are prepared by rotational molding using the silicone composition disclosed herein.

In general, injection molding is widely used for manufacturing a variety of plastic parts for various applications. In general, injection molding is a process by which a polymer is melted or softened and then injected at high pressure into a mold, which is the inverse of the desired shape, to form parts of the desired shape and size. The mold can be made from metal, such as steel and aluminum. The injection molding of polymers is described in Beaumont et al., "Successful Injection Molding: Process, Design, and Simulation," Hanser Gardner Publications, Cincinnati, Ohio (2002), which is incorporated herein by reference in its entirety.

In some embodiments, the silicone articles can be prepared from a silicone composition comprising a liquid silicone rubber (LSR) by the liquid injection molding (LIM) process. In some embodiments, the LSR can be pumped through pipelines and/or tubes to the mold equipment. In other embodiments, a two component LSR is pumped through a static mixer by a metering pump. The two component LSR generally comprises a catalyst and a reactant. The catalyst (Part A) can be introduced into the mixture prior to simultaneous with or subsequent to the addition of optional additives. The reactant (Part B) is generally an organohydrogensiloxane cross-linker which can be blended into the mixture simultaneous with or subsequent to the addition of optional additives, including crosslinking inhibitors if required. In the static mixer, the components are mixed uniformly and then transferred to a cooled metering section of the injection molding machine. In some embodiments, the ratio of Part A: Part B is from about 2:1 to about 1:2, from about 1.5:1 to about 1:1.5, from about 1.25:1 to about 1:1.25, from about 1.1:1 to about 1:1.1, or from about 1.05:1 to about 1:1.05. Other ratios may be used to alter the properties of the silicone product. In some embodiments, the ratio of Part A: Part B can be altered by reducing or increasing the amount of the filler. In other embodiments, to adjust the crosslinking properties, the ratio of Part A: Part B can be altered by increasing the amount of the catalyst such that the LSR will set faster and at lower temperatures. In further embodiments, the ratio of Part A: Part B can be altered by increasing the monomer content such that the LSR will set slower at a higher temperature. In still further embodiments, the silicone composition is cured at a temperature from about 50 °C to about 200 °C, or from about 70 °C to about 180 °C, for a suitable period of time dependent on the temperature, amount of crosslinking agents and inhibitors. In still further embodiments, the silicone composition is cured at a temperature from about 140 °C to about 160°C.

In some embodiments, a reinforced material is embedded in the silicone composition disclosed herein. In other embodiments, the reinforced material can be in the form of a fiber sheet. When a fiber sheet is used, a non-stick plastic film may be used to separate the top and bottom molds before inserting the fiber sheet. The non-stick plastic film may be standard cellophane, plastic wrap, wax paper, MYLAR^{®}, polyethylene, PVC, PTFE, TEFLON^{®}, or the like. In further embodiments, a TEFLON^{®} sheet having a thickness of about 0.05 cm is used to separate the molds.

In some embodiments, the fiber sheets can be coated with a premixed liquid silicone AB. It is desirable that the premixed liquid silicone AB should be used immediately or refrigerated to increase its shelf life. A variety of commercially available roll coating and spray coating machines can be used. The sheet sizes can be varied according to amounts of coated sheet required and available materials. In one embodiment, a roll of fiberglass sheet is loaded into a z-type roll coating machine and then rolled through a bath of premixed liquid silicone AB. The machine speed and the size of bath can be used to adjust the coating time. Coating time may range from less than 1 minute to over 1 hour. Longer coating times are required for denser fiber weaves and thicker materials. Inversely, shorter coating times may be used with thin, open weaves. In one embodiment, the coating time is from about 6 minutes to about 18 minutes, or from about 10 minutes to about 14 minutes. In another embodiment, the coating time is from about 11 minutes to about 13 minutes. The coated fiber may be dried and then cut to a desirable size for incorporation into a variety of silicone articles.

In certain embodiments, the silicone composition comprises a silicone rubber and is placed in the metering section of the injection molding machine. Subsequently, the silicone composition in the metering section can be pushed through cooled sprue and runner systems into a heated cavity where the vulcanization of the silicone composition occur in the mold to form a molded article. In other embodiments, the molded article can be further post-cured to provide the desirable mechanical, chemical and physical properties. In further embodiments, the molded article can be cleaned with water and then dried.

Extrusion is a process by which a polymer is propelled continuously along a screw through regions of high temperature and pressure where it is melted and compacted, and finally forced through a die. The extrusion of polymers is described in C. Rauwendaal, "Polymer Extrusion", Hanser Publishers, New York, NY (1986); and M.J. Stevens, "Extruder Principals and Operation," Ellsevier Applied Science Publishers, New York, NY (1985), both of which are incorporated herein by reference in their entirety.

In some embodiments, the silicone composition disclosed herein may be extrusion molded and vulcanized into a silicone article. The silicone composition disclosed herein may comprise at least one additive disclosed herein. Extrusion molding and vulcanization of the silicone rubber composition may be carried out by any generally well-known extrusion and vulcanization methods. Some non-limiting examples of vulcanization methods include atmospheric hot-air vulcanization, continuous steam vulcanization, electron beam vulcanization, UHF (ultra-high frequency) vulcanization, and LCM (liquid curing medium) vulcanization. In certain embodiments, the vulcanization occurs at about 100 °C to about 500 °C for about 1 second to about 30 minutes. In other embodiments, the molded article can be further post-cured to provide the desirable mechanical, chemical and physical properties.

Molding is generally a process by which a polymer is melted and led into a mold, which is the inverse of the desired shape, to form parts of the desired shape and size. Molding can be pressureless or pressure-assisted. The molding of polymers is described in Hans-Georg Elias "An Introduction to Plastics," Wiley-VCH, Weinhei, Germany, pp. 161-165 (2003), which is incorporated herein by reference.

Rotational molding is a process generally used for producing hollow plastic products. By using additional post-molding operations, complex components can be produced as effectively as other molding and extrusion techniques. Rotational molding differs from other processing methods in that the heating, melting, shaping, and cooling stages all occur after the polymer is placed in the mold, therefore no external pressure is applied during forming. The rotational molding of polymers is described in Glenn Beall, "Rotational Molding : Design, Materials & Processing," Hanser Gardner Publications, Cincinnati, Ohio (1998), which is incorporated herein by reference in its entirety.

The silicone compositions disclosed herein can be used to prepare a variety of consumer and industrial products that can be found in every room of a typical home. For example, the consumer products include kitchen products, cooking products, baking products, food storage products and the like. In general, the silicone compositions disclosed herein can be used to prepare any silicone articles for household and industrial applications. Non-limiting examples of useful silicone articles include baby products such as feeding bottles, pacifiers, teat assembly, milk bottle holders; cookwares such as steamers; lids or covers such as tagine, steamer lids, pan lids or pot lids; gloves; bakewares such as baking pans, bread pans, cupcake pans and cookie pans; measuring cups; bowls; flower poachers; pots such as melting pots; grids such as handle grids, cup holder grids, can holder grids and bottle holder grids; colanders; pads such as microwave pads; mats such as chopping board mats and sink mats; spatulas; cake molds, jelly molds (e.g., JELL-O^{®} molds); ice trays; storage containers; gaskets or seals; heat shields; fire stops; cushions; insulation materials and the like.

In certain embodiments, silicone articles such as bottles, feeding bottles, teat assemblies, pacifiers, or bottle holders can be prepared by the following process which comprises the steps of (a) providing a silicone composition; and (b) injecting the silicone composition into a mold of the silicone article disclosed herein. In other embodiments, the process further comprises the step of curing the silicone composition in the mold to form a silicone article. In further embodiments, the process further comprises the step of post-curing the silicone article.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

### EXAMPLES

### Example 1

Example 1 is an embodiment of the silicone composition disclosed herein. Example 1 can be prepared by mixing or milling a mixture of about 99.5 wt.% of KE-571U (a silicone rubber; obtained from Shin-Etsu Chemical Co., Ltd., Tokyo, Japan) and about 0.5 wt.% of SKH-167 (a catalyst; obtained from Shin-Etsu Chemical Co., Ltd., Tokyo, Japan). All the wt.% amounts are based on the total weight of Example 1.

### Example 2

Example 2 is another embodiment of the silicone composition disclosed herein. Example 2 can be prepared by mixing or milling a mixture of about 99.7 wt.% of KE-571U (a silicone rubber; obtained from Shin-Etsu Chemical Co., Ltd., Tokyo, Japan) and about 0.3 wt.% of SKH-158 (a catalyst; obtained from Shin-Etsu Chemical Co., Ltd., Tokyo, Japan). All the wt.% amounts are based on the total weight of Example 2.

### Example 3 - Temperature Indicator

Example 3 is an embodiment of the temperature indicator disclosed herein. Example 3 can be prepared by an injection molding machine, which is commercially available from Zhen Cheng Liquid Silicone Injection Molding Machinery, Dongguan City, China. The mold has one tooling cavity and comprises an upper part and a lower part, which is kept shut during the injection-molding process. Before injection, the upper part and lower part of the mold are closed and heated to about 150 °C. An amount of 5 wt.% of a thermochromic pigment is placed evenly on the lower portion of the mold and 95 wt.% of Example 1 is placed on top of the thermochromic pigment. The upper mold and lower mold are closed and pressed at a machine pressure of 150 kg. The thermochromic pigment is allowed to disperse into Example 1 to form a mixture and the mixture is allowed to cure inside the mold for 300 seconds to form a semi-finished temperature indicator. The semi-finished temperature indicator is taken out and subjected to silkscreen printing on one side. The semi-finished temperature indicator is then post cured for about four hours at a temperature of about 205 °C ± 4 °C. The post-cured temperature indicator is cleaned with pure water and then dried.

### Example 4 - Bottle

Example 4 is an embodiment of the bottle disclosed herein. Example 4 can be prepared by an injection molding machine, which is commercially available from Zhen Cheng Liquid Silicone Injection Molding Machinery, Dongguan City, China. The mold has 2 tooling cavities and each comprised an upper portion, a lower portion and a mandrel (or a core mold) between the upper portion and the lower portion. The temperature indicator of Example 3 is placed on the lower portion of the mold, while Example 1 is placed both on top of the Example 3 on the lower portion of the mold and on the upper side of the mandrel. The upper mold and lower mold are closed and pressed towards the mandrel at a machine pressure of 150 kg and heated to about 150 °C. Example 1 is allowed to cure inside the mold for about 600 seconds. After about 600 seconds, the mold is opened and the semi-finished bottle is taken out from the mold. Excess silicone rubber of the bottle is trimmed. The bottle is post-cured for about 4 hours at a temperature of about 205 °C ± 4 °C. The post-cured bottle is cleaned with pure water and dried.

### Example 5- Teat Assembly

Example 5 is an embodiment of the teat assembly disclosed herein. Example 5 can be prepared by an injection molding machine, which is commercially available from Zhen Cheng Liquid Silicone Injection Molding Machinery, Dongguan City, China. The mold has two tooling cavities cavity and comprises an upper part and a lower part, which are kept shut during the injection-molding process. Before injection, the upper part and lower part are closed and heated to about 150 °C. Then Example 1 is placed into the storage or metering section and forced into the mold at a machine pressure of about 150 kg. Example 1 is allowed to cure inside the mold for about 300 seconds. After about 300 seconds, the mold is opened and the semi-finished teat assembly is taken out from the mold. Excess silicone rubber of the teat assembly is trimmed. The teat assembly is post-cured for about 4 hours at a temperature of about 205 °C ± 4 °C. The post-cured teat assembly is cleaned with pure water and dried.

### Example 6- Pacifier

Example 5 is an embodiment of the pacifier disclosed herein. Example 6 is prepared by an injection molding machine, which is commercially available from Zhen Cheng Liquid Silicone Injection Molding Machinery, Dongguan City, China. The mold has two tooling cavities cavity and comprises an upper part and a lower part, which are kept shut during the injection-molding process. Before injection, the upper part and lower part are closed and heated to about 150 °C. Then Example 2 is placed into the storage or metering section and forced into the mold at a machine pressure of about 150 kg. Example 2 is allowed to cure inside the mold for about 300 seconds. After about 300 seconds, the mold is opened and the semi-finished pacifier is taken out from the mold. Excess silicone rubber of the pacifier is trimmed. The pacifier is post-cured for about 4 hours at a temperature of about 205 °C ± 4 °C. The post-cured pacifier is cleaned with pure water and dried.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. The method of making the compositions may be described as comprising a number of acts or steps. These steps or acts may be practiced in any sequence or order unless otherwise indicated. Finally, any number disclosed herein should be construed to mean approximate, regardless of whether the word "about" or "approximately" is used in describing the number. The appended claims intend to cover all those modifications and variations as falling within the scope of the invention.

## Claims

1. A bottle comprising:
(a) a container comprising an open end; and
(b) a temperature indicator attached to the outer surface of the container,
wherein the container comprises a silicone composition.

2. The bottle of claim 1 further comprising a teat assembly, wherein the teat assembly comprises:
(a) a dome-shaped portion;
(b) a sucking end connected to and extending from the dome-shaped portion, wherein the sucking end comprises a perforated tip; and
(c) a flange at the base of the dome-shaped portion.

3. The bottle of claim 2 further comprising a mounting ring, wherein the mounting ring engages the teat assembly to the container.

4. The bottle of claim 3, wherein the mounting ring engages the open end of the container by threaded engagement or fictional engagement.

5. The bottle of claim 4, wherein the container is curved with a concave front surface and a convex back surface when the container is viewed from the side.

6. The bottle of claim 5, wherein at least one supporting member is attached to the convex back surface of the container.

7. The bottle of claim 6, wherein the perforated tip of the sucking end is above the open end of the container when the bottle lays on the supporting member.

8. The bottle of claim 6, wherein the supporting member comprises a plurality of legs.

9. The bottle of claim 1, wherein the silicone composition comprises a silicone rubber, a liquid silicone rubber, a fluorosilicone rubber, a silicone-modified ethylene propylene rubber, a silicone polyester resin, a silicone alkyd resin, a silicone epoxy resin, or a combination thereof.

10. The bottle of claim 9, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

11. The bottle of claim 1, wherein the temperature indicator comprises a thermochromic material.

12. The bottle of claim 11, wherein the thermochromic material is a liquid crystal, a leuco dye or a combination thereof.

13. A pacifier comprising:
(a) a teat portion comprising a base and a sucking portion connected to and extending from the base; and
(b) an invertible member having a first fixed position and a second fixed position,
wherein the invertible member is connected to and extended from the base in the same direction as the sucking portion at the first fixed position and opposite to the sucking portion at the second fixed position.

14. The pacifier according to claim 12, wherein the invertible member has a substantially spherical or ellipsoidal shape when positioned at the first fixed position or in the second fixed position.

15. The pacifier of claim 12, wherein at least part of the sucking portion is enclosed by the invertible member in the first fixed position.

16. The pacifier of claim 12 further comprising a grip connected to and extending from the base opposite to the sucking portion.

17. The pacifier of claim 15, wherein at least a part of the grip is enclosed by the invertible member in the second fixed position.

18. The pacifier of claim 12, wherein the teat assembly comprises a silicone composition.

19. The pacifier of claim 17, wherein the silicone composition comprises a silicone rubber, a liquid silicone rubber, a fluorosilicone rubber, a silicone-modified ethylene propylene rubber, a silicone polyester resin, a silicone alkyd resin, a silicone epoxy resin, or a combination thereof.

20. The pacifier of claim 18, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.

21. A bottle holder comprising:
(a) a body portion comprising an open end and a close end;
(b) at least one handle integrally extending from the open end of the body portion; and
(c) a temperature indicator attached to the outer surface of the body portion, wherein the body portion and the at least one handle comprise a silicone composition.

22. The bottle holder of claim 20, wherein the body portion is cylindrical.

23. The bottle holder of claim 20, wherein the at least one handle comprises a pair of handles.

24. The bottle holder of claim 22, wherein the pair of handles is substantial mirror image of each other.

25. The bottle holder of claim 20, wherein the silicone composition comprises a silicone rubber, a liquid silicone rubber, a fluorosilicone rubber, a silicone-modified ethylene propylene rubber, a silicone polyester resin, a silicone alkyd resin, a silicone epoxy resin, or a combination thereof.

26. The bottle holder of claim 20, wherein the silicone composition further comprises a natural rubber, a synthetic rubber, a cross-linking agent, a catalyst, a filler, a reinforced material, a colorant, a filler, a dispersant, a surfactant, a wetting agent, a coupling agent, a lubricant, an accelerator, a rheology modifier, a thickener, an adhesion promoter, a plasticizer, an age resister, an anti-oxidant, an anti-foaming agent, an anti-blocking agent, an anti-static agent, an anti-mildew agent, an acid acceptor, a UV stabilizer, a blowing agent, a fire retardant, a desiccant or a combination thereof.
